(19)

**Europäisches Patentamt**
**European Patent Office**
**Office européen des brevets**

(11) **EP 2 196 260 A1**

(12) **EUROPEAN PATENT APPLICATION**

(43) Date of publication:
**16.06.2010 Bulletin 2010/24**

(51) Int Cl.:
*B01J 23/75* (2006.01)   *B01J 23/755* (2006.01)
*B01J 23/88* (2006.01)   *B01J 23/888* (2006.01)
*B01J 27/16* (2006.01)   *C10G 45/08* (2006.01)
*B01J 21/18* (2006.01)   *B01J 35/10* (2006.01)

(21) Application number: **08170413.2**

(22) Date of filing: **02.12.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Research Institute of Petroleum Industry (RIPI)**
**Tehran (IR)**

(72) Inventors:
• **Rashidi, Alimorad**
  **18799 Tehran (IR)**
• **Mohajeri, Ali**
  **18799 Tehran (IR)**
• **Jafari Jozani, Kheirollah**
  **Karaj (IR)**

• **Khorami, Payman**
  **18799 Theran (IR)**
• **Amini, Bahman**
  **Karaj (IR)**
• **Parviz, Dorsa**
  **18799 Theran (IR)**
• **Kalbasi, Mansour**
  **Tehran (IR)**

(74) Representative: **Fuchs Patentanwälte**
  **Westhafenplatz 1**
  **60327 Frankfurt am Main (DE)**

Remarks:
Amended claims in accordance with Rule 137(2) EPC.

(54) **Hydrodesulphurization nanocatalyst, its use and a process for its production**

(57)   A novel nano-supported hydrodesuiphurization (HDS) catalyst (nanocatalyst) is prepared for the hydrodesulphurization of hydrocarbonaceous feed stock. The catalyst can be prepared through different methods and also used under milder conditions than those required for the conventionally used HDS catalysts, but can also function under other hydrodesulphurization operating conditions. The catalyst leads to relatively better hydrodesulphurization activities.

**EP 2 196 260 A1**

## Description

## Background of the invention

### Field of the invention

The present invention relates to a hydrodesulphurization (HDS) nanocatalyst, use of the hydrodesulphurization nanocatalyst in a hydrodesulphurization process and a process for the production of a hydrodesulphurization nanocatalyst.

### Description of the state of the art

In order to minimize the negative health and environmental effects of automotive exhaust emissions, legal restrictions on sulphur content of fuels, especially diesel, are becoming more stringent. Germany, for instance, has even passed an act limiting the sulphur in diesel and gasoline to 10 ppm from November 2001. New sulphur limits of 30 to 50 ppm for gasoline and diesel marketed in the European Community and the USA have been implemented since January 2005, and even further decrease can be expected in the future. So there is an increasing demand for producing catalysts to meet the environmental restrictions.

Gasoline, diesel and non-transportation fuels account for about 75 to 80% of the total refinery products. Most of the desulphurization processes are therefore meant to treat the streams forming these end products and hence the efficiency of the desulphurization technologies is a key point in such processes. Conventional hydrodesulphurization processes are not capable of producing zero sulphur level fuels, while maintaining other fuel requirements such as oxygen content, vapor pressure, overall aromatics content, boiling range and olefin content for gasoline, and cetane number, density, polynuclear aromatics content, and distillation 95% point for diesel fuel.

On the other hand, regarding the fact that gasoline is formed by blending straight run naphtha, naphtha from fluid catalytic cracking (FCC) units, and coker naphtha, most of the sulphur in gasoline originates from FCC naphtha. Treatment of FCC gasoline is, therefore, of great importance, while the sulphur content of the other gasoline forming refinery streams is not a problem for the current environmental regulations. However, for yielding gasoline streams of < 30 ppm S, the refinery has to treat the other sources of naphtha as well. It is currently known that a relatively high level of sulphur removal can be achieved by using conventional or advanced CoMo and NiMo catalysts. However, simultaneous hydrogenation of olefins should be minimized because it reduces the octane number. Also aromatics are not desired in the final gasoline product. Diesel fuel is formed from straight run diesel, light cycle oil from the FCC unit, hydrocracker diesel, and coker diesel. Diesel is currently desulphurized by the hydro-treating of all blended refinery streams. To get diesel with less sulphur content the hydrotreating operation has to be more severe. For straight run diesel, sulphur removal is the only concern in hydrotreating since the other diesel specifications (e.g. cetane number, density, and polyaromatics content) are satisfactorily met.

Hydrocracker diesel, on the other hand, is usually relatively high in quality and does not require additional treatment to reduce the sulphur content.

As with gasoline, the diesel produced by the FCC and coker units normally contains up to 2.5% by weight sulphur. Both the FCC and coker diesel products have very low cetane numbers, high densities, and high aromatic and polyaromatic contents. In addition to getting desulphurized, these streams must be upgraded by high pressure and temperature processes requiring expensive catalysts. Another problem is that, at high temperatures, the hydrogenation-dehydrogenation equilibrium tends to shift toward aromatics. As with gasoline desulphurization, there are many options for developing and applying advanced desulphurization technologies with simultaneous upgrading to higher diesel specifications.

Non-transportation fuels are formed from vacuum gas oils, and residual fractions from coking and FCC units. The sulphur content requirements for non-transportation fuels are less strict than for gasoline and diesel because industrial fuels are used in stationary applications while sulphur emissions can be avoided by combustion gas cleaning processes. In particular, high temperature solid adsorbents based on zinc titanate or manganese/alumina are currently receiving much attention. In practice, the major process includes the capture of sulphur oxides with calcium oxide producing calcium sulfate. Of course, for non-transportation fuels, HDS technologies can also be applied without considering other fuel specifications that must be met for gasoline and diesel fuels. It has to be expected that the sulphur level requirements will become more stringent in the near future, approaching zero sulphur emissions from burned fuels. The next generation of engines, especially fuel cell based engines, will also require fuels with extremely low (preferably zero) sulphur content. Therefore, scientists and engineers have long been involved in improving current refinery technologies and developing advanced technologies should shoot for complete sulphur removal from refinery products.

Organosulphur compounds are commonly present in almost all fractions of crude oil distillation. Higher boiling point fractions contain relatively more sulphur and the sulphur compounds are of higher molecular weight. Therefore, a wide spectrum of sulphur-containing compounds should be considered with respect to reactivity in hydrotreating processes.

Middle distillates normally contain benzothiophenes and dibenzothiophenes while the direct fractions of crude oil contain thiophenes, mercaptane sulfides and disulfides. Among these compounds, sulfides and disulfides have the highest chemical activities followed by thiophenes, benzothiophenes and dibenzothiophenes (DBT). As a result, common desulphurization processes remove sulfides and thiophenes much more easily. Deep desulphurization can also lead to the removal of benzothiophenes, but cannot affect alkylated benzothiophenes, especially those with alkyl branches on 4 and 6 positions.

The reactivity of organosulphur compounds varies widely depending on their structure and local sulphur atom environment. Low-boiling crude oil fractions mainly contain aliphatic organosulphur compounds such as mercaptanes, sulfides, and disulfides. They are very reactive in conventional hydrotreating processes and can easily be completely removed from the fuel.

In the case of higher boiling crude oil fractions such as heavy straight run naphtha, straight run diesel and light FCC naphtha, the organosulphur compounds pre-dominantly contain thiophenic rings. These compounds include thiophenes and benzothiophenes and their alkylated derivatives. These thiophene-containing compounds are more stable than mercaptanes and sulfides to be treated via hydrotreating. The heaviest fractions blended to the gasoline and diesel pools such as bottom FCC naphtha, coker naphtha, FCC and coker diesel contain mainly alkylated benzothiophenes, dibenzothiophenes (DBTs) and alkyldibenzothiophenes, as well as polynuclear organic sulphur compounds, i.e. the least reactive sulphur compounds in the HDS reaction.

HDS of thiophenic compounds proceeds via two reaction pathways. In the first pathway the sulphur atom is directly removed from the molecule (hydrogenolysis pathway), while in the second one the aromatic ring is hydrogenated and sulphur is subsequently removed (hydrogenation pathway). Both pathways occur in parallel, employing different active sites of the catalyst surface. The reaction pathway is determined by the nature of the sulphur compounds, the reaction conditions, and the catalyst used. At the same reaction conditions, DBT reacts preferably through the hydrogenolysis pathway, while for DBT alkylated at the 4 and 6 positions both the hydrogenation and hydrogenolysis routes are significant.

The conventional HDS process is usually conducted over sulfidized $CoMo/Al_2O_3$ and $NiMo/Al_2O_3$ catalysts, the performance of which, in terms of desulphurization level, activity and selectivity depends on the properties of the specific catalyst used (concentration of the active species, support properties, synthesis route), the reaction conditions (sulfidizing protocol, temperature, partial pressure of hydrogen and $H_2S$), nature and concentration of the sulphur compounds present in the feed stream, reactor and process design.

Alumina is the most widely used support of hydrodesulphurization catalysts. Notable feature of alumina supports is their ability to provide high dispersion of the active metal components. However, numerous chemical interactions exist between alumina and transition metal oxides. Some of the formed species are very stable and resist completing sulfidizing and therefore the catalytic activity of such catalysts is low. The coke formation during hydrodesulphurization process of petroleum fractions is another disadvantage of alumina-supported catalysts, which causes deactivation and decreases lifetime of catalysts. In hydrodesulphurization catalyst active surface is defined as a portion of surface occupied by metal sulfide (metal selected from group 6B of the periodic table such as molybdenum sulfide). Results show that chemical interactions between active species and support in alumina supported catalysts prevent multilayer formation of metal sulfide and therefore decrease the reactivity.

Other CoMo and NiMo catalysts have been prepared in which activated carbon supports have been used to modify the properties of the hydrodesulphurization catalysts.

US5770046 discloses a catalyst for selective hydrodesulphurization of cracked naphtha under conditions to minimize saturation of the olefin content. The carbon supported catalyst used for the HDS process is prepared by depositing group IA, IIA, IIIB, VIIIB, VIB and IB metals of the periodic table over activated carbon support.

The carbonous material supports used for the preparation of hydrodesulphurization catalysts have the advantage of eliminating the support-active metal interactions observed among the conventional supports which affects the activity of the final catalyst. These catalysts however, suffer disadvantages such as low absorption capabilities, almost no electrical, thermal properties and also their surface chemistry is not controllable with respect to new carbonous structures such as carbon nanotubes, which in turn lead to low desulphurization activities.

It is the object of the present invention to provide hydrodesulphurization nanocatalysts that overcome the problems of the prior art catalysts. The catalysts according to the present invention for example have an increased surface area and therefore a better activity. For the more common catalysts according to the present invention provide for improved dispersion of the active metals over the support material, while chemical interactions between the support material and active metal are minimized. It is also an aspect of the present invention to provide catalysts that function under relatively mild operating conditions when compared to conventional catalysts.

**Detailed description of the invention**

The present invention refers to a hydrodesulphurization nanocatalyst comprising a nano-structured porous carbonaceous support material, at least one active metal selected from the group 8B of the periodic table of elements and at least one active metal selected from the group 6B of the periodic table of elements.

Preferably, the nanocatalyst according to the present invention comprises the group 8B metal and the group 6B metal in a molar ratio of 0.1 to 1, most preferably 0.2 to 0.5.

The content of active metals in the nanocatalyst according to the present invention is preferably 1 to 20% by weight, more preferably 3 to 15 % by weight.

Additionally, it is preferred that the catalyst according to the present invention further comprises phosphorus pentoxide preferably in amounts of from 0.1 to 5 % by weight. Phosphorous pentoxide acts as a promoter and increases the hydrodesulphurization activity of the catalyst.

According to an embodiment of the present invention the hydrodesulphurization nanocatalyst comprises molybdenum and/or tungsten. Preferably the hydrodesulphurization nanocatalyst additionally comprises cobalt and/or nickel. It is further preferred that the nanocatalyst according to the present invention comprises molybdenum as the group 6B metal. In a further preferred embodiment the nanocatalyst according to the present invention comprises cobalt as the group 8B metal. There are naturally some differences between CoMo and NiMo catalysts. NiMo catalysts have higher hydrogenation activities than CoMo catalysts. But hydrodesulphurization reactions with NiMo catalysts mainly proceed via the hydrogenation route. Therefore, the most preferred active metals are Co and Mo.

The catalyst according to the present invention preferably comprises a binder. The binder is preferably selected from the group consisting of furfural alcohol, poly furfural alcohol, coal tar and polyacrylonitrile. Polyacrilonitrile is the most preferred binder. For this purpose a solution including 15% polyacrilonitrile and 85% dimethylformamide is used, in which dimethylformamide is the solvent. The binder content of the support is in the range of 5-40% by weight, preferably in the range of from 5 to 15% by weight.

It is according to a preferred embodiment of the present invention that the nano-structured porous carbonaceous support material of the catalyst is functionalized. In the context of the present invention "functionalized" means that the surface of the support material is provided with certain functional groups. These functional groups are selected from the group consisting of hydroxyl, carboxyl and amine.

The application of a functionalized support leads to better surface chemical properties in the catalyst, improving its HDS activity. For example, carboxyl functional groups, which are the most preferred functional group for the invention, improve the acidic properties of the support and therefore the hydrogenation activity of the catalyst will be increased.

The catalyst according to the present invention preferably is in the form of pellets, cylindrical structures and/or certain size fractions obtained by sieving the catalyst. Pellets are most preferred. These pellets preferably have a diameter of 5 mm. The height of the pellets is preferably 2 mm. It is necessary to use the catalyst in defined shapes and or sizes in order to prevent the fixed bed reactors from choking.

The nanostructure porous carbonaceous support material comprised in the catalyst according to the present invention preferably has a pore volume of 0.2 to 1.2 $cm^3/g$, more preferably of 0.3 to 1.1 $cm^3/g$ and most preferably of 0.9 to 1.1 $cm^3/g$. Furthermore, the surface area of the support material is preferably from 100 to 1500 $m^2/g$, more preferably from 400 to 900 $m^2/g$ and most preferably from 400 to 700 $m^2/g$.

According to an embodiment of the present invention the support material of the catalyst comprises carbon nanotubes, preferably consists of carbon nanotubes.

The expression "consisting of" as used hereinafter means that the respective material is entirely made of the mentioned component, e.g. the respective nano-structured support material, while it may still comprise usual additives and impurities, e.g. substances that have not willingly been added to achieve a certain effect. The expression "comprise" as used hereinafter is meaning that the respective material may contain further ingredients that are not explicitly mentioned but encompass such ingredients as for example further nano-structured support material or additives.

According to a special embodiment of the present invention the support material comprises single wall carbon nanotubes (SWCNT), preferably consists of SWCNT. The SWCNT preferably has an average tube diameter of from 1 to 4 nm. The preferred pore volume of these SWCNT is preferably from 0.2 to 1.2 $cm^3/g$. The surface area of the SWCNT according to the present invention is preferably from 500 to 1500 $m^2/g$. The tube length of the SWCNT of the present invention is preferably from 1 to 100 $\mu$m.

According to a special embodiment of the present invention the support material comprises double wall carbon nanotubes (DWCNT), preferably consists of DWCNT. The DWCNT preferably have an average tube diameter of from 2 to 5 nm. The pore volume of the DWCNT is preferably 0.2 to 1.2 $cm^3/g$. The surface area of the DWCNT is preferably in the range of from 400 to 700 $m^2/g$. The tube length of the DWCNT is preferably from 1 to 100 $\mu$m.

According to a special embodiment of the present invention the support material of the nanocatalyst comprises multi wall carbon nanotubes (MWCNT), preferably consists of MWCNT. The tube diameter of the MWCNT is preferably from 1 to 80 nm. The pore volume of the MWCNT is preferably from 0.2 to 1.2 $cm^3/g$. The MWCNT preferably have a surface area of from 100 to 500 m$^2$/g. The tube length of the MWCNT is preferably from 1 to 100 $\mu$m.

According to a special embodiment of the present invention the support material comprises carbon nano-fibers, preferably consists of carbon nano-fibers. The fiber diameter of these carbon nano-fibers is preferably from 50 to 100 nm. The pore volume of the carbon nano-fibers is preferably from 0.2 to 0.7 cm$^3$/g. In a preferred embodiment the surface area of the carbon nano-fibers is between100 to 700 m$^2$/g. The carbon nano-fibers preferably have a fiber length of from 1 to 100 $\mu$m.

In a special embodiment of the present invention the support material of the nano-catalyst comprises nano-porous carbon, preferably consists of nano-porous carbon. In a preferred embodiment the nano-porous carbon has a pore diameter of 4 to 5 nm. The pore volume of the nano-porous carbon preferably is between 0.9 and 1.1 cm$^3$/g. The surface area of the nano-porous carbon preferably is from 800 to 900 m$^2$/g.

According to a special embodiment of the present invention the support material of the nanocatalyst comprises carbon nanohorn, preferably consists of carbon nano-horn. The pore volume of the carbon nano-horn preferably is from 0.3 to 0.5 cm$^3$/g. The pore diameter of the carbon nano-horn is preferably from 30 to 50 nm.

According to a special embodiment of the present invention the support material of the nanocatalyst comprises carbon nano-tube fibers, preferably consists of carbon nano-tube fibers. The pore diameter of the carbon nanotube fibers is preferably from 4 to 8 nm. The pore volume of the carbon nanotube fibers is preferably from 0.8 to 1.2 cm$^3$/g. The carbon nanotube fibers preferably have a surface area of from 600 to 900 m$^2$/g.

The hydrodesulphurization nanocatalyst according to the present invention is particularly suited to be used in a process for hydrodesulphurization. It is particularly preferred that the nanocatalyst according to the present invention is used in process for deep hydrodesulphurization. Most preferably the nanocatalyst according to the present invention is used in a process for hydrodesulphurizing petroleum fractions with boiling points in the range of 40 to 700°C, wherein the preferred petroleum fractions are light naphtha, heavy naphtha, gasoline and gas oil. According to a further embodiment, the nanocatalyst according to the present invention is used for hydrodesulphurizing residues, heavy oil, light crude oil and sand oil.

The present invention also refers to a process for the production of a nanocatalyst according to the present invention, comprising the steps of:

    a) Providing the catalyst support material,
    b) Providing a solution of at least one active metal,
    c) Dispersing the solution onto the support material,
    d) Drying the support material,
    e) Calcinating the catalyst,
    f) optionally increasing the temperature,
    g) optionally forming the catalyst to pellets.

According to preferred embodiments of the present invention the solution of at least one active metal is an aqueous solution, most preferably the solvent of the solution is distilled water. In an embodiment of the present invention the solution comprises two active metals. In another embodiment of the present invention different active metals are dissolved in different solutions and dispersed onto the catalyst in consecutive impregnation steps. According to preferred embodiments of the present invention the solution additionally comprises an acid, which is preferably an organic acid, and most preferably phosphoric acid and/or citric acid.

According to a preferred embodiment of the present invention the support material is provided by extruding carbon nanostructures together with a binder.

According to a further embodiment of the present invention the support material is provided by a method selected from the group consisting of arc discharge, chemical vapor deposition, catalytic growth in gas phase and laser ablation.

In a preferred embodiment of the process according to the present invention the active metal is deposited on the support material by impregnation, microemulsion, chemical vapor deposition, sol-gel or hydrothermal deposition. In a preferred embodiment the active metal is deposited on the support material by impregnation. Impregnation is a simple and commercial method for catalyst preparation and can be used for large scale production of catalysts.

In a preferred embodiment of the process according to the present invention the solution of at least one active metal additionally comprises at least one chelating agent. The chelating agent is preferably chosen from the group consisting of citric acid, olefinic acids, nitrilotriacetic acid and ethylenediaminetetracetic acid. Citric acid is the most preferred chelating agent. It is very cheap and effective for providing multilayer active species.

According to a preferred embodiment of the process according to the present invention at least one active metal is cobalt and the solution of the active metal is provided by dissolving a cobalt salt selected from the group of cobalt nitrate, acetate, carbonate, sulfate and thiocyanate.

In another embodiment of the process according to the present invention cobalt is used in the form of an organometallic compound.

According to an embodiment of the present invention at least one active metal is molybdenum and the active metal is added in the form of its salt selected from the group of ammonium heptamolybdate, ammonium molybdate, sodium molybdate and molybdenum oxides. In a further embodiment the active metal molybdenum is added as an organometallic compound.

Application of the active metal as an organometallic compound provides for an improved formation of nano-structured active metal structures on the support material.

According to another embodiment of the present invention, the active metal oxides (metal selected from group 8B and/or 6B of the periodic table) are synthesized as a nanostructure and dispersed on catalyst support.

According to a more preferred embodiment of the present invention the metal oxides to be dispersed over the nano-structured support are synthesized in nano-scale through methods such as hydrothermal, chemical vapor deposition, microemulsion and sol-gel and dispersed on nano-structured support.

According to another alternative embodiment of the present invention metals to be deposited on the support are prepared in the form of nano-structured sulfides, then dispersed on the nano-structured support, in which case the sulfidation step will be eliminated and the catalyst will be used directly in hydrodesulfurization process.

According to another alternative embodiment of the present invention the metal sulfide nanostructures to be deposited on the support are prepared through the method of microemulsion and/or chemical vapor deposition.

In a special embodiment of the process according to the present invention the process additionally comprises the step of sulfidizing the catalyst. This sulfidizing step may take place in any reactor, preferably in a fixed bed reactor. Sulfidizing may be done in the presence of any hydrocarbon fraction that comprises a sulfur containing species.

The hydrocarbon fraction that is preferably used in this invention is an ISOMAX fraction comprising 1% by weight of dimethyl disulfide. However, any other liquid hydrocarbon fraction comprising 1% by weight or more dimethyl sulfide can be used for this purpose.

ISOMAX is the product of the "ISOMAX unit" in oil refineries. In an "ISOMAX unit", heavy hydrocarbons such as fuel oil and vacuum gas oil are converted (cracked) to light and valuable products such as middle distillates. The ISOMAX process takes place at high temperatures and pressures, and hence the sulfur content of ISOMAX is very low.

Sulfidation preferably takes place at a liquid hourly space velocity (LHSV) of 1 to 10 hr $^{-1}$. In a further embodiment sulfidation takes place at a pressure of 5 to 60 bar (0.5-6 MPa). The temperature at which sulfidation preferably is done is 250 to 400°C. The hydrogen/hydrocarbon ratio is between 100 and 500 $\dfrac{Nm^3}{m^3}$.

According to a preferred embodiment of the process according to the present invention the drying step takes place at temperatures of between 50°C to 200°C, preferably 100°C to 150°C and most preferably at 120°C. In a further preferred embodiment of the process according to the present invention the drying step is performed for 4 to 24 hours, preferably between 5 to 15 hours and most preferably for 6 to 12 hours. Calcining of the catalyst preferably takes place at temperatures between 350°C to 600°C, preferably between 400°C to 500°C and most preferably at 450°C. Calcining is preferably done in nitrogen atmosphere.

The present invention further refers to a process for hydrodesulphurizing petroleum products by application of a catalyst according to the present invention. Hydrodesulphurization is among the processes used for treating sulphur-containing gas and oil streams in refineries. According to the process the sulphur-containing hydrocarbon streams are treated over a catalytic bed, under different operating conditions that are dictated by their nature (check the table below for the operating conditions corresponding to some typical hydrocarbon streams). A hydrodesulphurization process is performed in the presence of $H_2$-containing gas, which reacts with the sulphur-containing compounds and converts them to $H_2S$ which is later neutralized and separated.

Typical operating conditions

| Fuel Type | Pressure (Mpa) | LHSV (1/hr) | Temperature (°C) |
|---|---|---|---|
| Naphtha (gasoline) | 1.38-5.17 | 2-6 | 290-370 |
| Kerosene/ Gas oil/ diesel fuels | 3.45-10.30 | 0.5-3 | 315-400 |
| FCC feed pretreat | 6.90-20.70 | 0.5-2 | 370-425 |

It is an advantage of the catalyst according to the present invention that it functions even at conditions that are milder than the typical operating conditions of prior art catalysts. Especially, the catalyst of the present invention may be used in a process that is run at pressures between 0.5 and 6 MPa and temperatures between 250 to 400°C. A further advantage is that the catalyst of the present invention may be used with a broad variety of feedstocks. Especially, the present catalysts can be used in order to desulphurize hydrocarbon feedstocks with boiling points in the range from 40 to 700°C.

**Examples:**

The below examples are provided to elaborate one of the preferred embodiments of the invention and the method for the application thereof, and the scope of the invention is not limited to them.

**Example 1**

A solution including 2.46 g of a cobalt nitrate, 2.76 g of ammonium heptamolybdate and 30.6 g of distilled water was prepared. The metal content of the solution was then impregnated on 18 g of single wall carbon nanotubes of a 20-100 mesh size. The catalyst was then dried at 120°C for six hours. The calcination process was performed in a temperature programmed electric furnace under nitrogen atmosphere, according to which, starting from room temperature, the temperature was changed at a rate of 4 °C/min to 100°C and kept constant for two hours. The temperature was then increased to 450°C at a rate of 2 °C/min and kept constant for 4 hours. The resulting catalyst was pressed to form pellets of 5 mm in diameter and 2 mm in height. The catalyst is labeled CoMo10/SWNT.

**Example 2**

A paste including 26.7 g of binder (15% polyacrylonitrile+85% Dimethylformamide) and 18 g of multi wall carbon nanotube was prepared and extruded in cylindrical shape. The mixture was then dried at 120°C for six hours. The calcining process was performed in a temperature programmed electric furnace under nitrogen atmosphere, according to which, starting from room temperature, the temperature was changed at a rate of 2 °C/min to 500°C and kept constant for one hour. The resulting mixture was used as support. A solution including 3.21 g of a cobalt nitrate, 2.64 g of molybdenum oxide, 0.72 g of phosphoric acid, 4.63 g of citric acid and 12.6 g of distilled water was prepared. The metal content of the solution was then impregnated on the support. The catalyst was then dried at 120°C for six hours and calcinated as in example 1.The catalyst is labeled CoMo10-Ci-P/CNT-PAN15-1.

**Example 3**

A solution including 3.87 g of a cobalt nitrate, 23 g of distilled water was prepared. The metal content of the solution was then impregnated on 18 g of multi wall carbon nanotube of a 20-100 mesh size. The catalyst was then dried at 120°C for 12 hours and calcinated as in example 1. In a second step a solution of 4.22 g of ammonium heptamolybdate and 23 g of water was prepared, used for impregnation of the catalyst in the previous step and the catalyst was then dried at 120°C for 12 hours and calcinated as in example 1. It was used to form pellets of the same description as in example 1. The catalyst is labeled CoMo10-2S/CNT.

**Example 4**

A solution including 3.21 g of a cobalt nitrate, 3.58 g of ammonium heptamolybdate, and 4.63 g of citric acid and 23 g of distilled water was prepared. The metal content of the solution was then impregnated on 18 g of multi wall carbon nanotube of a 20-100 mesh size. The catalyst was then dried at 120°C for six hours and calcinated and palletized as in example 1. The catalyst is labeled CoMo10-Ci/CNT.

**Example 5**

A solution including 3.21 g of a cobalt nitrate, 3.58 g of ammonium heptamolybdate, and 0.72 g of phosphoric acid and 25 g of distilled water was prepared. The metal content of the solution was then impregnated on 18 g of multi wall carbon nanotube of a 20-100 mesh size. The yielded catalyst was then dried 120°C for six hours and calcinated and pelletized as in example 1. The catalyst is labeled CoMo10-P/CNT.

**Example 6**

A solution including 2.26 g of polyethylene glycole (MW 190-210), 7 g of ammonium heptamolybdate, and 25-30 g of distilled water was prepared and neutralized using an ammonia solution. The colorless solution turned milky upon heating. The solution was dried for about 2-3 hours at 120°C, to give a green-yellow powder, which was then heated in a temperature programmed electric furnace under air atmosphere starting from room temperature to 250°C at a rate of 5 °C/min and kept constant at this value for one hour. The temperature was then increased to 500°C at a rate of 5 °C/min and kept constant for 1.5 hours. This procedure is a typical method used for molybdenum oxide nanoparticles synthesis.

**Example 7**

Hydrodesulphurization was performed using the nanocatalysts CoMo10/SWNT, CoMo10-Ci-P/CNT-PAN15-1, and CoMo10-2S/CNT. An alumina supported catalyst (CoMo15/Alumina) was also used for comparison. Naphtha was used as feed for catalyst evaluation. Sulphur content of feed is 1270 ppm (by mass) and feed analysis presented in table 1. The hydrodesulphurization process was performed in a stainless steel fixed bed reactor using 14 mlit of catalyst in each test run. All of the catalysts were evaluated under similar operating conditions. An isomax solution containing 1% of dimethyl disulfide was used to sulfiding the catalysts.

After catalyst loading, the reactor temperature was changed from room temperature to 180°C at a rate of 40°C/hr under hydrogen atmosphere and then the sulfidizing feed was injected. The feed had a constant LHSV of $2 hr^{-1}$. After the feed injection, the temperature was changed to 260 °C at a rate of 20°C/hr and then to 310 °C at rate of 10°C/hr and kept at this temperature for 12 hours.

The sulfidizing step was carried out with a hydrogen/feed ratio of 175 Nlit/lit and pressure of 30 bar. After this step, the reaction product (collected in a condenser) was discharged and the hydrodesulphurization started with naphtha as the feed in a temperature of 310 °C, pressure of 15 bar, LHSV of 4 $hr^{-1}$ and hydrogen/feed ratio of 175Nlit/lit. This reaction was performed continuously for 96 hours and final sample after this time has been used for total sulphur analysis. Table 2, provides a comparison between CNT supported catalysts and conventional alumina catalyst.

Table1 - Feed analysis of the desulphurization feed used in this experiment

| Density at 15.56 °C | 0.7507 gr/ml |
|---|---|
| Color (ASTM D156) | +30 |
| Aromatics | 12.5 Vol.% |
| Naphthenics | 37.5 Vol.% |
| Olefins | Trace |
| IBP at 760 mmHg | 106 °C |
| 10% Vol. | 114 °C |
| 30% Vol. | 116 °C |
| 50% Vol. | 120 °C |
| 70% Vol. | 126 °C |
| 90% Vol. | 136 °C |
| 95% Vol. | 141 °C |
| FBP | 163°C |

Table 2 - Total sulphur comparison between hydrodesulphurization products

| Catalyst | Total sulphur in product (ppm) |
|---|---|
| CoMo10/SWNT | 10 |
| CoMo15/Alumina | 100 |
| CoMo10-Ci-P/CNT-PAN15-1 | 70 |
| CoMo10-2S/CNT | 20 |

**Example 8**

Comparisons between the operating conditions required for the best performance and also the hydrodesulphurization activity of the catalysts in the prior art and the nanocatalyst of the present invention was also done (Table 3). Naphtha was used as the feed throughout the experiments. The hydrodesulphurization activity was defined as:

$$\frac{(\text{sulfur content of feed} - \text{sulfur content of product})}{\text{sulfur content of feed}} \times 100$$

As it is evident the catalyst of the present invention requires relatively moderate operating conditions, and leads to higher HDS activities, which shows a very good hydrodesulphurization performance.

Table 3: Comparisons between the desulphurization activity of the catalysts in the prior art and the catalyst of the present invention

| Patent No. | Metal content (Co+Mo) % | Temperature (°C) | Pressure (bar) | Sulphur content of feed (ppmw) | Sulphur content of product (ppmw) | HDS activity | Catalyst |
|---|---|---|---|---|---|---|---|
| US5770046 | 6 | 270 | 20.5 | 1600 | 361 | 77.4 | Catalyst I* |
| US5770046 | 6 | 285 | 20.5 | 1600 | 139 | 91.3 | Catalyst I* |
| US5770046 | 6 | 285 | 20.5 | 1600 | 99 | 93.8 | Catalyst I* |
| US5770046 | 6 | 270 | 20.5 | 1600 | 353 | 77.9 | Catalyst II |
| US5770046 | 6 | 286 | 20.5 | 1600 | 184 | 88.5 | Catalyst II |
| US5770046 | 6 | 300 | 20.5 | 1600 | 106 | 93.4 | Catalyst II |
| US5770046 | 6 | 285 | 20.5 | 1600 | 255 | 84.1 | Catalyst III |
| US5770046 | 6 | 300 | 20.5 | 1600 | 98 | 93.9 | Catalyst III |
| US5770046 | 6 | 300 | 20.5 | 1600 | 170 | 89.4 | Catalyst IV |
| US5770046 | 6 | 285 | 20.5 | 1600 | 130 | 91.9 | Catalyst V |
| US5770046 | 6 | 300 | 20.5 | 1600 | 72 | 95.5 | Catalyst V |
| This invention | 5 | 310 | 15 | 1270 | 40 | 96.9 | CoMo5/SWNT |
| This invention | 10 | 310 | 15 | 1270 | 20 | 98.4 | CoMo10/MWNT |
| This invention | 10 | 310 | 15 | 1270 | 10 | 99.2 | CoMo10/MWNT |
| This invention | 10 | 310 | 15 | 2400 | 20 | 99.2 | CoMo10/MWNT |
| This invention | 10 | 330 | 10 | 2400 | 5 | 99.8 | CoMo10/MWNT |

**Claims**

1. A hydrodesulphurization nanocatalyst, comprising:

- a nano-structured porous carbonaceous support material, selected from the group consisting of carbon nanotubes, carbon nano-fibres, nano-porous carbon, carbon nano-horn, and carbon nanotube fibres,

- at least one active metal selected from the group 8B of the periodic table of elements, and
- at least one active metal selected from the group 6B of the periodic table of elements.

2. The hydrodesulphurization nanocatalyst according to claim 1, wherein the molar ratio of the group 8B metal to group 6B metal is 0.1 to 1.

3. The hydrodesulphurization nanocatalyst according to claims 1 or 2, wherein the content of active metals in the nanocatalyst is 1 to 20 percent by weight.

4. The hydrodesulphurization nanocatalyst according to one or more of claims 1 to 3, wherein the catalyst comprises phosphorous pentoxide in amounts of from 0.1 to 5 percent by weight.

5. The hydrodesulphurization nanocatalyst according to one or more of claims 1 to 4, wherein the group 8B metal is cobalt and/or nickel, preferably cobalt.

6. The hydrodesulphurization nanocatalyst according to one or more of the preceding claims, wherein the group 6B metal is molybdenum and/or tungsten, preferably molybdenum.

7. The hydrodesulphurization nanocatalyst according to one or more of the preceding claims, wherein the catalyst further comprises a binder.

8. The hydrodesulphurization nanocatalyst according to claim 7, wherein the binder is selected from the group consisting of furfural alcohol, polyfurfural alcohol, coal tar and polyacrylonitrile.

9. The hydrodesulphurization nanocatalyst according to one or more of the preceding claims, wherein the nano-structured porous carbonaceous support material is functionalized.

10. The hydrodesulphurization nanocatalyst according to one or more of the preceding claims, wherein the nano-structured porous carbonaceous support material is functionalized functional groups selected from the group consisting of hydroxyl, carboxyl and amine.

11. Use of the catalyst according to one or more of the preceding claims in a hydrodesulphurization process.

12. A process for the production of a nanocatalyst, comprising the steps of:

a. Providing the catalyst support material,
b. Providing a solution of at least one active metal,
c. Dispersing the solution onto the support material,
d. Drying the support material and
e. Calcinating the catalyst.

13. The process according to claim 12, wherein at least one active metal is cobalt and wherein organometallic compounds of cobalt are used.

14. The process according to claim 12 or 13, wherein at least one active metal is molybdenum and wherein organometallic compounds of molybdenum are used.

**Amended claims in accordance with Rule 137(2) EPC.**

1. A hydrodesulphurization nanocatalyst, comprising:

- carbon nanotubes,
- at least one active metal selected from the group VIII of the periodic table of elements, and
- at least one active metal selected from the group VIB of the periodic table of elements,

wherein the content of active metals in the nanocatalyst is 1 to 20 percent by weight and the group VIII active metal is cobalt and the group VIB active metal is molybdenum.

**2.** The hydrodesulphurization nanocatalyst according to claim 1, wherein the molar ratio of the group VIII metal to group VIB metal is 0.1 to 1.

**3.** The hydrodesulphurization nanocatalyst according to one or more of claims 1 to 2, wherein the catalyst comprises phosphorous pentoxide in amounts of from 0.1 to 5 percent by weight.

**4.** The hydrodesulphurization nanocatalyst according to one or more of the preceding claims, wherein the catalyst further comprises a binder.

**5.** The hydrodesulphurization nanocatalyst according to claim 4, wherein the binder is selected from the group consisting of furfural alcohol, polyfurfural alcohol, coal tar and polyacrylonitrile.

**6.** The hydrodesulphurization nanocatalyst according to one or more of the preceding claims, wherein the nano-structured porous carbonaceous support material is functionalized.

**7.** The hydrodesulphurization nanocatalyst according to one or more of the preceding claims, wherein the nano-structured porous carbonaceous support material is functionalized functional groups selected from the group consisting of hydroxyl, carboxyl and amine.

**8.** The hydrodesulfurization nanocatalyst according to claims above, wherein the active metal oxides are synthesized as a nanostructure and dispersed on catalyst support.

**9.** The hydrodesulfurization nanocatalyst according to to one or more of the preceding claims, wherein the metals to be deposited on the support are prepared in the form of nano-structured sulfides, then dispersed on the nano-structured support, in which case the sulfidation step will be eliminated and the catalyst will be used directly in hydrodesulfurization process

**10.** Use of the catalyst according to one or more of the preceding claims in a hydrodesulphurization process.

**11.** A process for the production of a nanocatalyst, comprising the steps of:

    a. Providing the catalyst support material,
    b. Providing a solution of at least one active metal,
    c. Dispersing the solution onto the support material,
    d. Drying the support material and
    e. Calcinating the catalyst.

**12.** The process according to claim 11, wherein at least one active metal is cobalt and wherein organometallic compounds of cobalt are used.

**13.** The process according to claim 11 or 12, wherein at least one active metal is molybdenum and wherein organometallic compounds of molybdenum are used.

Europäisches
Patentamt

European
Patent Office

Office européen
des brevets

**EUROPEAN SEARCH REPORT**

Application Number

EP 08 17 0413

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 569 635 A (MOY DAVID [US] ET AL) 29 October 1996 (1996-10-29) * abstract * * column 3, lines 26-30 * * column 8, lines 42-63 * * examples IV-VII * * claims * | 1-14 | INV. B01J23/75 B01J23/755 B01J23/88 B01J23/888 B01J27/16 C10G45/08 B01J21/18 B01J35/10 |
| Y | ----- | 1-14 | |
| Y,D | US 5 770 046 A (SUDHAKAR CHAKKA [US]) 23 June 1998 (1998-06-23) * abstract * * column 5, lines 29-33 * * column 6, lines 43-64 * * column 7, lines 48-63 * * column 9, lines 11-42 * * column 10, line 62 - column 11, line 1 * * examples * | 1-14 | |
| Y | ----- US 6 099 960 A (TENNENT HOWARD [US] ET AL) 8 August 2000 (2000-08-08) * column 1, lines 10-20 * * column 4, lines 28-25 * * column 9, lines 24-58 * * column 15, line 62 - column 16, line 10 * | 9,10 | TECHNICAL FIELDS SEARCHED (IPC) B01J C10G |
| Y | ----- US 2003/116503 A1 (WANG YONG [US] ET AL) 26 June 2003 (2003-06-26) * paragraphs [0044], [0059] - [0061] * | 1-14 | |
| Y | ----- WO 2005/035117 A (MEXICANO INST PETROL [MX]; TOLEDO ANTONIO JOSE ANTONIO [MX]; ESCOBAR A) 21 April 2005 (2005-04-21) * abstract * * claims * * examples * ----- | 1-14 | |

The present search report has been drawn up for all claims

| Place of search | Date of completion of the search | Examiner |
|---|---|---|
| Munich | 26 March 2009 | Gosselin, Daniel |

EPO FORM 1503 03.82 (P04C01)

**ANNEX TO THE EUROPEAN SEARCH REPORT
ON EUROPEAN PATENT APPLICATION NO.**                EP 08 17 0413

This annex lists the patent family members relating to the patent documents cited in  the above-mentioned European search report.
The members are as contained in the European Patent Office EDP file on
The European Patent Office is in no way liable for these particulars which are merely given for the purpose of information.

26-03-2009

| Patent document cited in search report | | Publication date | Patent family member(s) | | Publication date |
|---|---|---|---|---|---|
| US 5569635 | A | 29-10-1996 | NONE | | |
| US 5770046 | A | 23-06-1998 | NONE | | |
| US 6099960 | A | 08-08-2000 | NONE | | |
| US 2003116503 | A1 | 26-06-2003 | AU | 2009200661 A1 | 12-03-2009 |
| | | | US | 2003119920 A1 | 26-06-2003 |
| | | | US | 2004147620 A1 | 29-07-2004 |
| WO 2005035117 | A | 21-04-2005 | AU | 2003267854 A1 | 27-04-2005 |

EPO FORM P0459

For more details about this annex : see Official Journal of the European Patent Office, No. 12/82

## REFERENCES CITED IN THE DESCRIPTION

**Patent documents cited in the description**

- US 5770046 A